# EUROPEAN PATENT APPLICATION

(11) **EP 3 958 360 A1**
(43) Date of publication of application: **23.02.2022**
(21) Application number: 20191542.8
(22) Date of filing: 18.08.2020
(51) Int. Cl.: H01M 4/86, C25B 9/19, C25B 9/65, C25B 9/77, H01M 4/90, H01M 4/92, H01M 8/0232, H01M 8/0245, H01M 4/88

(54) **HYBRID STRUCTURED POROUS TRANSPORT ELECTRODES WITH ELECTROCHEMICALLY ACTIVE TOP-LAYER**

(71) Applicant: PAUL SCHERRER INSTITUT, 5232 Villigen PSI (CH)
(72) Inventor: SCHULER, Tobias, 5300 Turgi (CH); BÜCHI, Dr. Felix, 4900 Langenthal (CH)
(74) Representative: Fischer, Michael

(57) **Abstract**

It is the objective of the present invention to provide a compact porous transport electrode that shows an increase in cell efficiency as well as superior durability eliminating the problem of low catalyst utilization for low and high catalyst loadings and catalyst layer degradation. At the same time, the unifying of multiple components in a single component design results in reduced capital expenditures.

This objective is achieved according to the present invention by a hybrid, porous transport electrode based on a plurality of thin sintered porous layers and at least a electrochemically active top layer having a permeability for gaseous and liquid substances in an electrochemical cell; said multilayer porous transport electrodes being suited to be assembled between a bipolar plate and a membrane of the electrochemical cell, comprising:
a) at least a first support porous layer and a second intermediate porous layer comprising fibres and non-defined shaped particles of a conductive material, wherein the mean particle size decreases from layer to layer in the direction seen from the bipolar plate towards the membrane; and
b) the first porous layer being made from sintered fibres of the conductive material and the second layer being made from non-defined shaped particles of a conductive material, wherein the first porous layer having a contact surface enabled to be oriented towards the bipolar plate having a bigger pore size than the second porous layer having a contact surface enabled to be oriented towards the membrane; and
c) the electrochemically active top layer comprising an electrochemically active material or mixtures thereof being deposited on the second porous layer, wherein the electrochemically active top layer having a contact surface enabled to be oriented towards the membrane and having a smaller pore size than the second porous layer and first porous layer.

The employment of hybrid designed porous electrode structures, comprised of a plurality of porous layers and at least one electrochemically active top layer in optional combination with thermal and electrical conductivity coating provides simultaneously economic and technical improvement by performance optimization und the unification of multicomponent in a single component design.

## Description

The present invention relates to a porous transport electrode, based on a plurality of sintered porous layers with different particle geometries and an electrochemically active top layer having a permeability for gaseous and liquid substances in an electrochemical cell; said multilayer porous transport electrode being suited to be assembled between a bipolar plate and a membrane of the electrochemical cell.

Electrochemical apparatus with stacked components such as polymer electrolyte water electrolyzers (PEWE) and polymer electrolyte fuel cells (PEFC) are considered as electrochemical devices converting water into oxygen and hydrogen or generating power by recombination of hydrogen and oxygen. The electrochemical apparatus is comprised of a protonic conducting solid electrolyte, anodic and cathodic catalyst layers as well as porous transport layers (PTL). Current collectors, so-called bipolar plates are used for electrical charge transfer between single cells when multiple cells are put in series in a stack configuration. Usually, said porous transport layers are sandwiched between the bipolar plate and a catalyst coated membrane (CCM) consisting of an anodic catalyst layer (CL) on one side of an ionic conductive polymer membrane and the cathodic catalyst layer on the other side of the polymer membrane.

In PEWE porous transport layers and catalyst layers are key components, facilitating two phase flow of product and educts, electrical, thermal transport and the latter ones driving the electrochemical reaction for electrochemical decomposition of water into oxygen and hydrogen. The harsh acidic conditions and high operational voltages (voltages between open circuit voltage and 3 V) require the employment of electrochemical inert and stable valve metals, preferentially titanium based materials for PTLs and bipolar plates. Pt group metals such as Ir and Ru, their oxides and alloys preferentially in combination with electrochemically inert support materials such as Ti oxides or transparent conductive oxides (TCO) e.g. antimony doped tin oxide (ATO) are employed for catalyst layers. The upscaling of PEWE is crucially dependent on the availability of the conventionally used element Iridium with low abundance, limiting PEWE production capacity to ∼2GW/a with today's technology. The efficiency of an electrolyzer is highly affected by the properties of the porous transport layers and catalyst layers. In particular, their mechanical interference dictates efficiency being the key parameter in PEWE, as operating cost typically represents up to 70% of the system lifetime costs. The so-called interfacial contact area describing the physical contact area between catalyst layer and porous transport layer surface, affects the catalyst utilization. This in turn has an impact on all loss categories.

Conventional, quasi-incompressible single layer porous transport layers (SL-PTLs) provide non-suitable mechanical and electrochemically properties when combined with the ductile catalyst coated membranes. The coarse surface properties of the PTLs induce high mechanical stress in the CCM due to highly heterogeneous contact pressure distribution. This results in membrane deformation up to 25% of the entire membrane thickness. Plastic deformation of the catalyst layer and the membrane are observed. Consequently, mechanical degradation can occur in form of catalyst layer crack formation/propagation and membrane thinning. Also, catalyst layer domains which are not in direct contact with the PTLs are known to show low to no electrochemical activity. This is mitigated to some extent by highly loaded catalyst layers with electrocatalyst loading bigger than 0.3 mg_{cat}/cm² where state-of-the-art catalyst loading of electrocatalyst are between 1-2 mg_{cat}/cm² thereby ensuring an interconnected electrical and ionic percolation network.

When aiming for low loaded catalyst layers with electrocatalyst loading smaller than 0.3 mg_{cat}/cm², then a segregation between parts of the catalyst layer occurs. Locally non-connected agglomerate domains are created. The structure of single layer PTL materials prevents the use of low catalyst loadings. The locally isolated domains on the membrane are largely non contacted by the coarse PTL surface particle and therefore the catalyst utilization decreases, translating in even higher losses and lower efficiency.

The volumetric increase of support materials in the catalyst layer by dilution of electrochemically active materials is known to be challenging due to low electronic conductivity properties of support materials as e.g. for TiO2 and/or due to low stability and high degradation rates as e.g. for ATO. PEWE duty cycles in the range of >80.0000 hours are highly challenging to be achievable based on this approach.

A first attempt towards a combination of catalyst layer and porous transport layers to form a so-called porous transport electrode was pursued based on single layer PTLs. The problem of rough PTL surface properties and low interfacial contact area manifests in low catalyst layer utilization due to the deposition of catalyst in the big pore space being inaccessible for the membrane to contact and to provide ionic conductivity for driving the electrochemical reaction. Also, the direct deposition of catalyst layer on the geometrically flat membrane results in thick catalyst layers suppressing improved efficiency due to long percolation length and associated high mass transport, ionic and electrical losses. The two-phase flow of water and gas in the catalyst layer affects the performance by non-optimized transport of educts from the pore space through ionomer thin films to the active sites.

It is therefore the objective of the present invention to provide a novel class of highly efficient thin hybrid porous transport electrodes enabling improved system efficiency and in particular employment of low loaded catalyst layers by enabling high catalyst utilization and improved fluid transport in the porous support layer bulk and in the catalyst layer, as well as superior durability eliminating mechanical stress applied on the catalyst layer.

This objective is achieved according to the present invention by porous transport electrode, based on a plurality of sintered porous layers with different particle geometries and an electrochemically active top layer having a permeability for gaseous and liquid substances in an electrochemical cell; said multilayer porous transport electrode being suited to be assembled between a bipolar plate and a membrane of the electrochemical cell, comprising:
a) at least a first support porous layer and a second intermediate porous layer comprising fibres and non-defined shaped particles of a conductive material, wherein the mean particle size decreases from layer to layer in the direction seen from the bipolar plate towards the membrane; and
b) the first porous layer being made from sintered fibres of the conductive material and the second layer being made from non-defined shaped particles of a conductive material, wherein the first porous layer having a contact surface enabled to be oriented towards the bipolar plate having a bigger pore size than the second porous layer having a contact surface enabled to be oriented towards the membrane; and
c) the electrochemically active top layer comprising an electrochemically active material or mixtures thereof being deposited on the second porous layer, wherein the electrochemically active top layer having a contact surface enabled to be oriented towards the membrane and having a smaller pore size than the second porous layer and first porous layer.

The use of a hybrid, multilayer designed porous transport electrode, comprised of a plurality of porous layers based on different particle geometries and a deposited porous catalyst layer (and optionally in combination with a or more conductivity coatings between the second layer and the electrochemically active top layer) provides simultaneously economic and technical improvement by unification of single layers to one component and offers optimization of technical and electrochemical properties. Also reduced catalyst layer thickness can be obtained due to extended, larger surface area when employing a second intermediate layer between a porous support layer and the catalyst layer (the electrochemically active top layer). Thinner catalyst layers translate into reduced loss by mass, electrical and ionic transport and boost cell efficiency. This approach of unifying several components in a single component design results in a simultaneous decrease of operational expenditure (Opex) as well as capital expenditure (Capex) due to improved efficiency as well as materials cost savings.

A first layer based on fibre materials provides high mechanical integrity and enables the manufacturing of thin and compact PTE designs in contrast to employment of non-defined shaped particles as material for the PTL bulk structure limited to PTL thicknesses of ≥ 0.5 mm because of mechanical stability requirements and fabrication restrictions for elevated pressure applications up to 600 bar. Also, the higher elastic modulus of fibre based support layers is of interest when employing high porosities for improved water and gas transport distribution in the thin support structures.

The combination of thin support layers and broad pore size distribution with high porosity is mandatory to reduce mass transport losses in the first layer. It improves cell efficiency due to stream lining of gas and water transport in big and small pores respectively by capillary pressure driven fluid transport.

The fine structure of the second layer, based on small non-defined shaped particles, provides high mechanical integrity and high thermal and electrical conductivity. Also, the intrinsically given high surface area provides an extended surface for the deposition of the electrochemically active top layer - hereinafter also referred to as third layer) which would not be possible on the fibre-based first layer.

The third layer directly deposited on the high surface area of the second layer features smaller pore size compared to the second layer and is based on electrochemically active materials. The direct contact between the second layer and the third layer ensures electrical conductivity to all deposited particles of the third layer and enables high electrochemical activity and high catalyst utilization. A preferential conductivity coating between the second layer and the third layer further decreases electrical contact resistances and improves heat management.

The compact PTE design with a multilayer structure and pore size gradients between each layer, results in a controlled stream lining of gas and water transport between membrane and bipolar plates. The overall gas saturation decreases for PTEs and membrane configurations in comparison to configurations with PTL and CCM cell designs, thus improving cell efficiency and mitigating gas passivation at the catalyst layer interface due to reduced gas saturation in the bulk of the porous layers.

Also, the entire catalyst layer is in direct electrical contact with the second layer and can be efficiently utilized in contrast to PTL and CCM configurations. The direct deposition of the catalyst layer on the smooth and extended surface of the second layer eliminates mechanical stress applied on the ductile catalyst layer and improves catalyst layer lifetime.

Preferably, the first porous layer may have a mean fibre diameter from below 5 µm to 50 µm and/or the second porous layer, labeled support layer, has a mean particle size in the range from 0.5 to 50 µm and the third layer may have a mean particle size of 0.005 to 2.5 µm.

Suitably, the first porous layer has a thickness in the range from 10 to 300 µm and the second porous layer has a thickness in the range from 10 to 200 µm. The third layer has a thickness in the range from 0.1 to 50 µm.

In a preferred embodiment of the present invention, the conductive material of the first and the second layer is titanium and/or a valve metal and/or stainless steel having a corrosion resistant coating. The third layer is based on an electrochemically active material which can but is not limited to Platinum group metals and their alloys and oxides preferentially supported on high surface area materials such as Ti oxides or transparent conductive oxides (TCO), such as indium tin oxide, fluorine tin oxide, aluminium doped zinc oxide and antimony tin oxide.

In order to mitigate the formation of Ti oxide layer at the surface of the second layer and to improve the heat transport, the second porous layer may comprise at least partially an electrically conductive coating based on an alloy or an inert metal, preferably one of or a combination of Au, Pt and Ir, preferably having a thickness in the range from 0.01 to 0.8 µm.

In order to provide optimized water and gas fluid transport each layer may be comprise pore size gradients, with pore sizes decreasing from the bipolar plate to membrane site. The cascade-like pore structure is key to efficient supply of educts as well as product removal to and from the active surface of the catalyst layer through the porous support layers bulk.

Preferred embodiments of the present invention are hereinafter described in more detail with reference to the attached drawings which depict in:
- Fig. 1: a simplified cartoon of a three-layer porous transport electrode configuration exhibited in a cross-section view;
;
- Fig. 2: a simplified cartoon of a 5-layer porous transport electrode configuration including electrical conductive layers at contact surfaces shown in cross-section view;

The present invention relates to a multilayer porous transport electrode (PTE) based on a hybrid configuration of different sintered particle geometries and an electrochemically active top layer for an electrochemical apparatus with stacked components and solid electrolyte. The employment of different geometric shaped particles, namely fibre shapes in the first layer 1 and non-defined shaped particles in the second layer 2 in combination with the direct deposition of a catalyst layer as a third layer 3 on the extended particle surface of the second layer 2 provides a novel compact design and integration of multiple components in a single unit while obtaining superior efficiency and lower mechanical catalyst degradation even for low catalyst loadings featuring electrocatalyst loadings smaller than 0.3 mg_{cat}/cm².

Further, the multilayer of the PTEs is obtained by the sintering process of fibre and particles where vacuum plasma spray coating and binder based spray coating result in high tortuosity and hydrophobic surface properties according to the prior art inducing a decrease in performance. Also, the essential requirements of high surface area and smooth surface properties for catalyst layer depositions are prevented by the stated manufacturing technologies. The third layer 3 is deposited preferentially by spray coating but also not limited to printing, thermal, chemical or physical deposition of active catalyst layer materials.

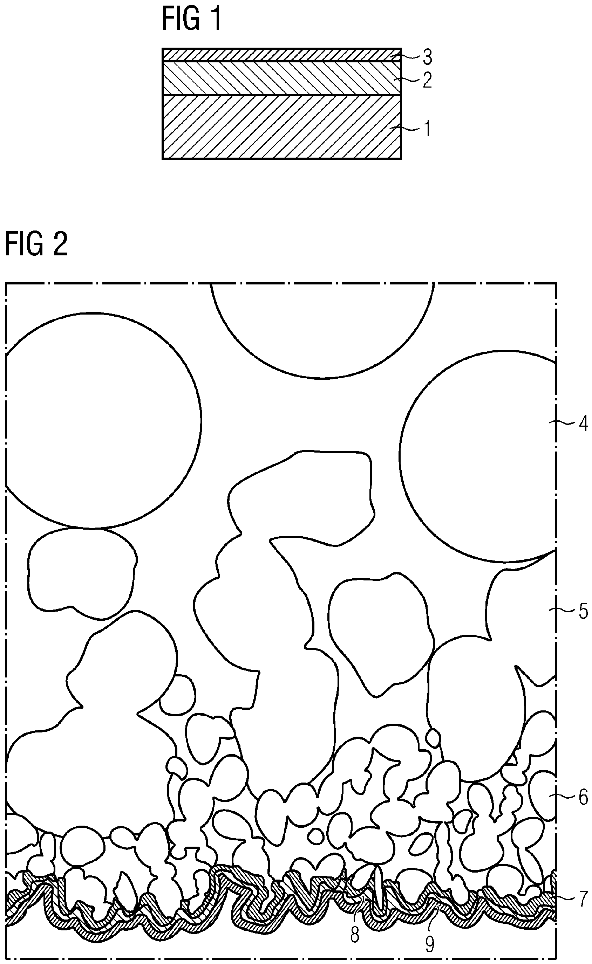

Fig. 1 exhibits a simplistic representation of a multilayer PTE using a single support layer, a single intermediate layer and a single catalyst layer as this is not common knowledge according to the prior art.

Conventional single layer porous transport electrodes provide non-suitable electrochemical and mechanical properties for catalyst layer deposition. Rough surfaces and low surface areas in combination with big pores are not able to provide high catalyst layer utilizations. The abyssal valleys at the surface of single layer PTE prevent the membrane from contacting the catalyst layer deposited in the deep pores. Consequently, low catalyst utilization is observed. Direct deposition of the catalyst layer 3 on the smooth and high surface intermediate second layer provides simultaneously high electrical conductivity but also reduces local mechanical stress applied onto the catalyst layer. The compact design and gradient structure of pore sizes controlled streamlining of two-phase flow.

The innovative unification of a thin support layer 1 with a high surface area, low surface roughness intermediate layer 2 and direct deposition of the catalyst layer 3 provides essential requirements for long lasting, high performance components at an economically viable production cost. Hybrid multilayer porous transport electrodes are comprised of at least one thin fibre based support layer and at least one particle based intermediate layer and at least one catalyst layer. Preferential open porosities of layer 1 was determined to be in the range of 35 % to 80 %, open porosity of layer 2 was determined to be in the range of 30% to 60% and open porosity of layer 3 was determined to be 25% to 70%.

Figure 2 shows a multilayer PTE structure based on a 5-layer configuration including a conductivity coating 7 at the interface between layer 6 and layer 8 to improve thermal and electrical conductivity. A support layer 4 shown in Figure 2 is comprised of fibres with sizes in the range of 5 µm to 50 µm and features a preferential thickness of 0.3 mm down to 0.03 mm, preferably 100 to 200 µm.

A significant increase of catalyst deposition area is obtained by the application of hybrid structured porous transport electrode. The intermediate layers 5 and 6 are sintered on the support layer 4. Abyssal valleys of the support layer are first filled by non-shape defined, high surface particle layer 5 and layer 6 wherein mean pore size of layer 5 is bigger than layer 6. Particle sizes of intermediate layers 5 and 6 are preferentially in the range of 0.5 - 50 µm. Intermediate layers feature a thickness of 10 µm - 200 µm. The approach of multi-sintered intermediate layers results in extended surface area with improved smoothness and more efficient fluid transport. Sintering of fibre and particle based layers enables fabrication of a thin, high surface support matrix for the deposition of the catalyst layer. The gradient pore structure, broad pore size distribution and high open-porosity in the range of 30 % - 70 % enables controlled stream lining of water and gas transport in the bulk of the material. The electrochemically active catalyst layers are deposited directly on the coated, high surface area of the second intermediate layer resulting in low catalyst layer thickness compared to deposition on geometrically flat membranes. Mechanical stress is locally reduced and crack formation is suppressed when catalyst layers are directly deposited on the surface contour lines of the incompressible porous layers rather than on the ductile membrane. Also, high catalyst utilization is obtained due to direct contact with porous transport layers. The multilayer, gradient porosity structure of the catalyst layer 8, having bigger porosity than layer 9, provides higher accessibility of educts to the outer most catalyst layers facing the membrane. Thereby optimized gas removal from the active sites is obtained. Thereby, mass transport as well as voltage losses related to electro-kinetics are reduced and cell efficiency optimized.

Complementary, a conductive layer of a highly inert, thermal and electrical conductive coating is used. Improved interface properties translate into better heat management and superior electrochemical performance while suppressing growing of semiconductive oxide layers at the intermediate layer surface. Alloys and metals as Au, Pt and Ir are conventionally employed as coating materials. Thin films are deposited via chemical, physical or electrochemical deposition techniques, preferentially sputtering is used.

Generally, PEWE losses are based on three categories namely kinetic, ohmic and mass transport. The novel design of a hybrid PTE enables the fabrication of thin compact units suppressing mass transport losses due to shorter percolation, diffusion and permeation length in the porous support layer 1, intermediate layer 2 and catalyst layer 3. The catalyst layer deposition on the smooth, expanded surface of the intermediate layer further provides the opportunity to produce thin catalyst layers compared to prior knowledge of catalyst layers coated on the membrane. This embodiment is superior to catalyst coated single layer PTE designs due to the smooth, extended deposition area provided by intermediate layer 2. A gradient of pore sizes decreasing in direction from support layer to catalyst layer leads to streamlining of gas and water transport paths. Lower gas saturations are obtained, suppressing gas passivation effects on/in the catalyst layers reducing kinetic as well as mass transport losses. The direct deposition of the catalyst layers on the quasi-incompressible porous layer structures ensures high catalyst layer utilization and improved thermal as well as electrical conductivities. At the same time, the mechanical deformation of catalyst layers and membrane is decoupled, opposite to the on prior art with CCM designs. Consequently homogenous, thermal and mechanical contact pressure distributions are obtained providing long-term durability and stability of catalyst layers as well as of membranes. Ohmic interfacial resistance contributions can be further reduced by facultative employment of a conductivity coating.

Manufacturing of hybrid porous transport electrodes (h-PTE) can be conducted by the techno-economically established process of sintering in combination with catalyst layer deposition and coating processes.
The feedstock of the first layer 1 is based on fibre materials e.g. obtained by bundle drawing of Ti rods. Economically viable feedstock such as hydrogenation-dehydrogenation (HDH) Ti powders can be employed for the second layer.
A multi-layer structured green body consisting of at least layer 1 and 2 can be achieved by pressing of fibre and particle layers or by depositing a slurry comprised of binder, powder and solvent on top of a pressed fibre layer. Mechanical and morphological properties are obtained by a sintering process, preferentially vacuum sintering. Conventional sintering parameters are vacuum pressure of 1-5x 10⁻³ Pa, temperatures between 1100 °C to 1350 °C and soaking times of 1 h to 4 h.

The process of conductivity coating deposition is comprised of the removal of the semiconductor surface layer TiO2 performed preferentially by acid etching and the subsequent coating deposition preferentially by thermal, physical, chemical or electrochemical deposition techniques such as sputtering, physical vapor deposition or electroplating.

The catalyst layer is deposited on top of the intermediate layer via printing, physical or chemical or electrochemical deposition. Preferentially liquid coatings or sputtering are employed. In case of liquid coatings the ink is based on a mixture of solvents, water, polymer binder and electrochemically active powder materials. Pore formers such as graphite-based particles are employed for controlled variation of pore and porosity of catalyst layers as additives in the ink.

## Claims

1. A porous transport electrode, based on a plurality of sintered porous layers with different particle geometries and an electrochemically active top layer having a permeability for gaseous and liquid substances in an electrochemical cell; said multilayer porous transport electrode being suited to be assembled between a bipolar plate and a membrane of the electrochemical cell, comprising:
a) at least a first support porous layer and a second intermediate porous layer comprising fibres and non-defined shaped particles of a conductive material, wherein the mean particle size decreases from layer to layer in the direction seen from the bipolar plate towards the membrane; and
b) the first porous layer being made from fibres of the conductive material and the second layer being made from non-defined shaped particles of a conductive material, wherein the first porous layer having a contact surface enabled to be oriented towards the bipolar plate having a bigger pore size than the second porous layer having a contact surface enabled to be oriented towards the membrane; and
c) the electrochemically active top layer comprising an electrochemically active material or mixtures thereof being deposited on the second porous layer, wherein the electrochemically active top layer having a contact surface enabled to be oriented towards the membrane and having a smaller pore size than the second porous layer and first porous layer.

2. The porous transport electrode according to claim 1,
wherein the first porous layer has a mean particle size in the range from 5 µm to 50 µm and/or the second porous layer has a mean particle size in the range from 0.5 to 50 µm and the electrochemically active top layer has a mean particle size of 0.005 to 2.5 µm.

3. The porous transport electrode according to claim 1 or 2,
wherein the first porous layer has a thickness in the range from 10 to 300 µm and the second porous layer has a thickness in the range from 10 to 200 µm and the electrochemically active top layer has a thickness in the range from 0.1 to 50 µm.

4. The porous transport electrode according to any of the preceding claims,
wherein the conductive material of the first layer and the second layer is titanium and/or stainless steel having a protective layer and/or a valve metal and the material of the electrochemically active top layer is based on a electrochemically active material comprising of but not limited to metal or alloy or oxides, preferably one of or a combination of Platin Group Metals, and preferably supported on high surface materials.

5. The porous transport electrode according to any of the preceding claims,
wherein the second porous layer comprise at least partially a conductive coating comprising an inert metal or alloy, preferably one of or a combination of Au, Pt and Ir.

6. The porous transport electrode according to claim 5, wherein the conductive coating has a thickness in the range from 0.01 to 1 µm.

7. The porous transport electrode according to any of the preceding claims, wherein at least one additional porous layer is disposed between the first porous layer and the second porous layer; said additional porous layer having a mean particle size smaller than the first porous layer and bigger than the second porous layer and is comprised of fibres.

8. The porous transport electrode according to any of the preceding claims, wherein at least one additional based porous layer is disposed between the second porous layer and the electrochemically active top layer; said additional porous layer having a mean particle size smaller than the second porous layer and bigger than the third porous layer and is comprised of non-defined shaped particles.

9. The porous transport electrode according to any of the preceding claims, wherein at least one additional porous layer is disposed on the third porous layer; said additional porous layer having a different pore size than the electrochemically active top porous layer and is comprised of electrochemically active materials.

10. The porous transport electrode according to any of the preceding claims wherein at least one additional conductivity coating is deposited between the second layer and the electrochemically active top layer.
